# EUROPEAN PATENT APPLICATION

(11) **EP 4 432 191 A1**
(43) Date of publication of application: **18.09.2024**
(21) Application number: 23020125.3
(22) Date of filing: 14.03.2023
(51) Int. Cl.: G06Q 20/06, G06Q 20/36, G06Q 20/40

(54) **SECURE TOKEN ISSUER UNIT, SECURE SERVICE PROVIDER UNIT, ELECTRONIC PAYMENT TRANSACTION SYSTEM, METHOD FOR PROVIDING NEW TOKENS, METHOD FOR RECEIVING OLD TOKENS**

(71) Applicant: Giesecke+Devrient advance52 GmbH, 81677 München (DE)
(72) Inventor: Ulusoy, Fatih, 81243 München (DE); Alfert, Klaus, 53757 St. Augustin (DE)
(74) Representative: Giesecke+Devrient IP

(57) **Abstract**

The invention relates to a secure token issuer unit (CB) and to a secure service provider unit (SPU1) in an electronic payment transaction system. A secure token issuer unit (CB) of an electronic payment transaction system (TS) comprises
a minting unit (MU) adapted to generate a new token to be issued in the electronic payment transaction system (TS) and/or a melting unit adapted to delete old tokens to be deleted from the electronic payment transaction system (TS);
an issuer token management unit (TMU-CB) comprising one or more, new or old, token (T) of the electronic payment transaction system (TS);
control means for processing tokens (T) of the electronic payment transaction system (TS), wherein the control means is adapted to:
+ cause a direct exchange of tokens (T) with at least one first service provider token management unit (TMU-1-SPU) of a service provider unit (SPU) in the electronic payment transaction system (TS); and
+ send registration requests including token references to a token register (T-Reg) of the electronic payment transaction system (TS.

The secure token issuer unit (CB) comprises a second service provider token management unit (TMU-2-SPU) exclusively provided for the service provider unit (SPU). The second service provider token management unit (TMU-2-SPU) is provided for comprising a new token received (21) from the issuer token management unit (TMU-CB) and/or an old token to be send (24) to the issuer token management unit (TMU-CB).

## Description

The invention relates to a secure token issuer unit in an electronic payment transaction system. The invention also relates to a secure service provider unit in an electronic payment transaction system. The invention also relates to an electronic payment transaction system. The invention further relates to a method for providing new tokens, issued by a secure token issuer unit of an electronic payment transaction system. The invention also relates to a method for receiving old tokens to be deleted in an electronic payment transaction system. The token being issued from a secure token issuer unit of the electronic payment transaction system.

Tokens - also referred to as digital assets, electronic coins, coin data sets - may represent a central bank digital currency, short CBDC. These tokens are issued and deleted by a central bank. A central bank unit is hereinafter also referred to as secure token issuer unit.

Electronic payment transactions and associated payment transaction data must be safe and secure and so, means for protecting confidentiality, integrity, and availability of exchanged payment transaction data must be implemented. There are different technical approaches for this digital currency (CBDC) issued by the central bank.

According to a first approach, token (also referred to as digital coin data sets) are merely cryptographically secured by the central bank unit and the cryptographically secured tokens are exchanged directly between token management units of the participants in an encrypted manner. The token management units can verify the authenticity of the tokens based on the cryptographic security, such as signature, and checks a certificate from the central bank and/or the other token management units for validity within the certificate hierarchy in advance via online access.

According to a second approach, tokens are stored in a centralized or decentralized blockchain of a central bank. For a transaction, an ownership of a token record changes in the blockchain for which a lot of information (sender/recipient/amount) is published. Sender and recipient of the token need an online access to the blockchain at the time of the transaction.

According to a favorable third approach as for instance described in WO 2020 / 212 331 A1 tokens are stored in a local token management unit to be directly exchanged between participants of an electronic payment transaction system. The transferred token can validly be used after receipt from another participant without a need of approval or verification via an online connection. So, if an online connection is not available or inconvenient or should not be used for a specific token transaction, it remains possible to validly transfer tokens. For security and registration purposes, a token register stores token references of all valid tokens without knowing the tokens itself. So, the user can check validity of a received token. The token register only stores token references of the corresponding token. The token register allows to replace registered token references by new token references of the same overall monetary value. Thus participants of the electronic payment transaction system may split, merge or switch tokens. The participant may only change the token reference of the token (switch), may split a token into plural tokens, e.g., for obtaining a token with a reduced monetary value (split) and/or plural tokens can be merged to a single token, e.g., for obtaining a token with a higher monetary value (merge). In each case the participant may request the token register to replace a registered token reference(s) by his token reference(s), if the overall monetary value of the respective token references is not changed.

In contrast, generating and destroying of money (monetary values for a token (of any kind or type)) cannot be performed by a participant in the electronic payment system. As a security design rule, these two functions can only be performed by a secure element of a central issuing unit, such as a central bank.

This is because the issuing of new tokens for the electronic payment system (e.g., for provisioning to individual financial service provider units or user token management units) as well as the deletion of old tokens (e.g. from tokens whose monetary value should be redeemed to a bank account), needs to be secure and trustworthy.

In WO 2022 / 008 319 A1, the minting (generating) of new tokens and the outputting of these new tokens is secured with an air-gap process. However, the token issuer unit directly transfers these new tokens to a single token management unit of a financial service provider which then transfers it to its customers, being the main participants in the electronic payment system. Token to be deleted are directly transferred from a single token management unit of a financial service provider to the issuing unit that then deletes the token.

The preambles of the independent claims refer to the known concept as outlined in WO 2022 / 008 319 A1.

There is a need in the system for providing a high level of security, preferably without degrading usability and/or increasing the complexity. In particular the security of the solution for the token issuer unit and/or the service provider unit should be improved. Preferably, the resistance against attacks and/or manipulation should be improved.

The above-identified objectives are solved with the features of the independent patent claims. Further advantageous embodiments are described in the dependent patent claims.

In an aspect of the present invention there is a secure token issuer unit of an electronic payment transaction system. The secure token issuer unit comprises a minting unit adapted to generate a new token to be issued in the electronic payment transaction system and/or a melting unit adapted to delete old tokens to be deleted from the electronic payment transaction system. The secure token issuer unit further comprises an issuer token management unit comprising one or more, new or old, token of the electronic payment transaction system, and control means for processing tokens of the electronic payment transaction system. The control means is adapted to cause a direct exchange of tokens with at least one first service provider token management unit of a service provider unit in the electronic payment transaction system; and to send registration requests including token references to a token register of the electronic payment transaction system.

The present secure token issuer unit additionally comprises a (second) service provider token management unit exclusively provided for the service provider unit. The second service provider token management unit is provided for comprising a new token received from the issuer token management unit and/or an old token to be send to the issuer token management unit.

The security of the secure token issuer unit is improved, in particular since better attack protection of the issuer token management unit can now be provided. An interaction with external units, such as the first service provider token management unit in the service provider unit or user token management units, can be avoided. Moreover, as it will become more apparent from the following, the degree of changes required is minimized.

In another aspect of the present invention there is a secure service provider unit of an electronic payment transaction system. The secure service provider unit comprising: a first service provider token management unit, which comprises one or more token of the electronic payment transaction system, and control means. The control means are adapted to cause a direct exchange of one or more token with one or more other token management units in the electronic payment transaction system, to send registration requests including token references to a token register of the electronic payment transaction system, and to access the first service provider token management unit.

The present secure service provider unit comprises a second service provider token management unit exclusively provided for this secure service provider unit. The second service provider token management unit is provided to comprise a new token received from a token issuer unit and/or an old token to be send for deletion to the token issuer unit.

The security of the secure service provider unit and indirectly of the secure token issuer unit is improved. The first (primary) token management unit in the service provider unit is provided for performing normal transactions with external and/or user token management units. Accordingly, security measures in or for the (separate) second token management unit can be chosen differently. Moreover, the secure token issuer unit communication does not involve entities performing normal transactions anymore.

In the following, only for the secure service provider unit and/or the secure token issuer unit the term secure unit is used. Basically, the secure service provider unit and/or the secure token issuer unit may comprise the second service provider token management unit. Hence, for the sake of avoiding repetitions, some details applicable for both secure units will be explained for both, the secure service provider unit and/or the secure token issuer unit. Accordingly, the abbreviation/term secure unit herein only refers to the two options above, but does not refer to other units, for example token management units which may be secure token management units.

Furthermore, the terms new token or old token are partly used in the following without repeating their present meaning. An old token is a token to be deleted from the electronic payment transaction system by the secure token issuer unit. A new token is a token (freshly) issued in the electronic payment transaction system by the secure token issuer unit.

In the secure unit, i.e. the secure token issuer unit or the secure service provider unit, the second provider token management unit may be exclusively provided as an intermediate token management unit of the secure service provider unit between the first service provider token management unit and the issuer token management unit. In addition or alternatively, the second provider token management unit is exclusively provided for the transfer of new tokens issued in the electronic payment transaction system by the secure token issuer unit and/or old tokens to be deleted from the electronic payment transaction system by the secure token issuer unit. The second service provider token management unit may also be called a dedicated new- and/or old-token service-provider token-management-unit.

In the secure unit, i.e. the secure token issuer unit or the secure service provider unit, the second service provider token management unit may be a new (second) service provider token management unit for new tokens or an old (second) service provider token management unit for old tokens, wherein preferably the secure unit further comprises a old/new (second) service provider token management unit for old/new tokens respectively; or a (second) service provider token management unit for old and new tokens.

Hence, the secure unit may comprise
- a second service provider token management unit for old and new tokens; or
- a pair of two separate second service provider token management units for old tokens and for new tokens respectively; or
- only a new/old second service provider token management unit for new/old tokens. In the preferred variant the secure token issuer unit comprises a (the second) new-token service provider token management unit for new tokens and an old-token service provider token management unit for old tokens to be deleted.

In advantageous embodiments token management units of the electronic payment transaction system, for example user, provider or issuer token management units, may comprise one or more token of the electronic payment transaction system and comprise: a token management unit identifier and/or at least one cryptographic key and/or a certificate, the certificate preferably certifying the cryptographic key and/or the token management unit identifier.

A token management unit could also be called a wallet. It should be noted that the secure unit may comprise one or more control means, wherein the control means may control processes for one or more token management units.

In preferred variants the control means is configured to access multiple token management units, including the (either one or two) second service provider token management unit(s).

Accordingly, in the (case of the) secure service provider unit the control means may be configured to access only the first service provider token management unit or to access (preferably only) the first service provider token management unit and the (either one or two - see above) second service provider token management unit(s of the service provider). In addition or alternatively, in the secure service provider unit the control means may be configured to access user token management units of multiple users of the electronic payment transaction system.

Accordingly, in the (case of the) the secure token issuer unit, the control means may be configured to access one or preferably two second service provider token management units of the service provider unit or configured to access second service provider token management units of multiple service provider units, again possibly one but preferably two per service provider unit. The issuer token management unit may comprise/have its own control means. Alternatively, the control means may be configured to also access the issuer token management unit.

Token management units, in particular the second service provider token management unit(s), may comprise further data elements such as usage restrictions or conditional transactions.

Preferably, the second service provider token management unit(s) may be configured to exclusively exchange tokens with the first service provider token management unit of the service provider unit and with the issuer token management unit of the token issuer unit.

The second service provider token management unit further comprises usage restrictions. Preferably the usage restriction is a sender restriction and a recipient restriction. If the second service provider token management unit is provided for new and old tokens, it could comprise separate sender and recipient restrictions for new tokens and old tokens respectively. The second service provider token management unit by means of the usage restrictions is preferably restricted to receive (new) tokens from the issuer token management unit (sender restriction) and to transfer the received tokens to the first service provider token management unit (recipient restriction) and/or to receive (old) tokens from the first service provider token management unit (sender restriction) and to transfer the received tokens to the issuer token management unit (recipient restriction). Usage restrictions in the form of data elements advantageously can be selected per token management unit. For example, the second service provider token management units of different service provider units thus can be configured appropriately, e.g. by a sender/receiver restriction to the corresponding first service provider token management unit. The issuer token management unit could also comprise usage restrictions, for example a sender and a receiver restriction for each service provider unit, in a preferred variant to the two second service provider token management units (for old/new tokens) of the service provider in the secure token issuer unit. Another example for usage restrictions would be a monetary value limit, preferably a direction dependent monetary value limit (send/receive). These and other usage restrictions for wallets as well as an implementation are described in more detail in DE 10 2021 004 025.

The secure unit may comprise means for accessing a token storage, wherein the token storage is preferably a token vault, such as an HSM. The token vault may store token management units, including, in the secure service provide unit, the first service provider token management unit and optionally user token management units or , in the secure token issuer unit, the second token management unit(s) and optionally the issuer token management unit, preferably in separately encrypted form.

The second service provider token management unit(s) may be (each) provided as a single token management unit in which new tokens issued from the token issuer unit are separately managed from old tokens to be deleted at the token issuer unit, wherein the separation is preferably assured by: marking the token as new token or as old token to be deleted; and/or providing a token storage exclusively dedicated to the new token or the old token to be deleted; and/or defining dedicated access rights for accessing the new token and the old token to be deleted.

The second service provider token management unit(s) may comprise one or more conditional transactions. A conditional transaction of the second service provider token management unit could for example be: automatically transfer the received new token to the first service provider token management unit upon receipt (receipt is the condition for the transfer as the transaction). The possible use of conditional transactions in token management units is described in more detail in DE 10 2021 005 040.

An electronic payment transaction system, according to an aspect of the present solution, comprises the secure unit, i.e. the secure token issuer unit or the secure service provider unit, and a token register for registering the tokens of the electronic payment transaction system. The electronic payment transaction system may further comprise a plurality of secure token management units of users; and/or either one or more secure service provider units and the secure unit, secure token issuer unit, or the secure unit, secure service provider unit, and a secure token issuer unit.

Further aspects which may be separately applicable in any of the above embodiments will be described now shortly.

Generally, it could be added that new token issuance and/or old token deletion usually changes (increases and/or decreases respectively) the overall monetary value within the electronic payment transaction system (the sum of the monetary values of all tokens). The token reference of a new and/or old token may be added and/or deleted (respectively) in the token register. New (or freshly issued) tokens can be transferred from the secure token issuer unit. Old tokens can be transferred (for deletion) to the secure token issuer unit. In the electronic payment transaction system the secure token issuer unit is adapted to (create and) issue new tokens and/or delete old tokens. Participants in the electronic payment transaction system, such as users or service providers, may generate normal/replacement tokens based on their existing tokens only, for example in switch, split or merge operations. One or more token reference(s) registered in the token register may be replaced by one or more token reference(s) of participant generated normal tokens (replacement request). Normal tokens may be called replacement tokens. The participant generation of normal tokens thus does not affect (the monetary value of the tokens of the participant and/or) the overall monetary value of tokens in the electronic payment transaction system.

Each service provider unit will initially register itself at the payment system. Upon registration, the second secure token management unit(s) is(are) provided in the secure unit. The second secure token management unit may be referred to as an intermediate token management unit. In an embodiment, the secure token issuer unit may not respond to requests from the first secure token management unit.

When one or more new tokens are minted by a minting unit of the secure token issuer unit, these minted new tokens may be sent to the token vault of the secure token issuer units.

For collection and deletion of these old tokens, these tokens may be transferred to the secure token management unit of the secure token issuer unit.

The secure token issuer unit may comprise the token storage as a physical entity. The second secure token management unit may be configured to access the token storage. The token storage may be a token vault of this secure token issuer unit. The secure token issuer unit in the payment system may comprise one or more token storages. For instance, the secure token issuer unit may comprise a token vault that is air-gapped from other entities of the secure token issuer unit. In addition, the secure token issuer unit may host one or more token vaults dedicated to individual secure service provider units for storing new and old tokens.

The following statements related to the second secure token management unit are valid irrespective whether being hosted and/or located in the secure token issuer unit or in the service provider unit or in another entity (or as a separate entity) in the electronic payment system.

In an embodiment, the second secure token management unit is configured as a single token management unit in which new tokens issued from the secure token issuer unit are separately managed from tokens to be deleted at the token issuer unit.

This separation may be assured by a marking (also referred to as indicating or defining) of a token as a new token or as a token to be deleted. Such a marking may be an additional token element of the token, or it may be an entry in a respective database to which this second secure token management unit has exclusive access rights before sending receiving the respective token.

This separation may additionally or alternatively be assured by providing token storage exclusively dedicated to new token or token to be deleted. In more detail, a first token storage may be exclusively dedicated to new tokens and/or a second token storage may be exclusively dedicated to token to be deleted. The second secure token management unit has exclusive access rights to the first token storage when new tokens are received from the secure token issuer unit. The second secure token management unit has exclusive access rights to the second token storage when old tokens should be sent to the secure token issuer unit.

This separation may additionally or alternatively be assured by defining dedicated access rights for accessing new token and token to be deleted.

In an embodiment, the second secure token management unit may comprise a new token management unit (also referred to as liquidity wallet or liquidity token management unit). The second secure token management unit may comprise an old token management unit (also referred to as redeem wallet or redeem token management unit). With this old token management unit, the service provider unit may send old tokens to be deleted after approval by the issuing unit (redeem process). Such a redeem process may be initiated by the service provider unit by transferring the old tokens (that should be redeemed) from the token storage accessible for the service provider unit to the old token management unit. The old token management unit creates a redeem-request that is approved by the issuing unit.

Upon registration of the service provider unit, a new token management unit and an old token management unit as the second secure token management unit may be provided. Using two dedicated management unit as the second secure token management unit increases security and flexibility.

The second secure management token unit may be a hardware security module built in hardware or software to enable tamperproof and secure access to new and old tokens.

In a further aspect a method for providing new tokens, issued by a secure token issuer unit of an electronic payment transaction system is provided. A request for a new token is received at the secure token issuer unit from a secure service provider unit. If the request is approved by the secure token issuer unit, then the new token is transferred from an issuer token management unit accessible by the secure token issuer unit to a second service provider token management unit of the secure service provider unit, the second service provider token management unit being exclusively dedicated to the transfer of new tokens and optionally old tokens to be deleted. If the request is denied by the secure token issuer unit, then the requesting secure service provider unit is informed accordingly by the secure token issuer unit.

In another aspect a method for receiving old tokens to be deleted from an electronic payment transaction system by a secure token issuer unit of the electronic payment transaction system. An old token to be deleted is received in a second service provider token management unit in the electronic payment transaction system from a first service provider token management unit of the service provider, the second service provider token management unit being exclusively dedicated to the transfer of old tokens to be deleted and optionally new tokens. A deletion request of the service provider unit is received. If the request is approved by the secure token issuer unit, then the old token is transferred from the second service provider token management unit to the issuer token management unit. If the request is denied by the secure token issuer unit, then the requesting secure service provider unit is informed accordingly by the secure token issuer unit.

It should be noted that the actual process of minting a token or melting a token is basically independent from these requests (and/or the receipt of the old token or the issuing of the new token). The secure token issuer unit may create multiple new tokens at any time and store them in the issuer token management unit. The new tokens are provided upon request. However, the new tokens are not necessarily created and registered upon request only. Also the melting/deletion of old tokens, e.g. comprising destruction in the register and deletion in the issuer token management unit, may be performed in the secure token issuer unit at any time after receipt of the old token in the issuer token management unit.

In a further aspect, a non-transitory computer readable storage medium for tangibly storing computer program instructions capable of being executed by a processor is described. The computer program instructions defining the steps of one of the methods as described above.

The request for new tokens can be bound to further parameters, such as a daily limit or an overall limit or a security level, which the current service provider unit has. A request may be denied if a usual amount or a limit is exceeded.

The transfer of new tokens from a issuing unit vault (token storage of the secure token issuer unit) may be dependent on the availability of tokens. In case, a request for new tokens cannot be fulfilled at the time, the secure token issuer unit may request that new tokens are generated (minted) from the minting unit.

Typically each token comprises a monetary value as a first token element. The monetary value may be a data that represents money usable in one or more electronic payment transaction.

Each token may further comprise a private value as a second token element. The private value may a random number or may be a secret that is not known to participants not involved in a transaction. The private value may be a private element of a token element pair. A corresponding public element of such a token element pair may be used as an element in a token reference that is stored in a token register to register first-type tokens and second-type tokens. The token reference may comprise (or consist of) the public element and the monetary value.

In addition, each token may have further token elements as outlined below and may also have further token elements such as further metadata, e.g., currency data that indicates the currency which the monetary amount represents and/or validity data and/ or timestamp data.

The token may also be referred to as value note within this disclosure. The token can be used in online and offline payment transactions. The token may represent central bank digital currency, CBDC.

The token may comprise one or more token-individual history entries as a further token element. One history entry may represent one modification, such as SWITCH, SPLIT, MERGE, performed with this token. Such a further token element may also be referred to as history data.

It is possible to use tokens exclusively in offline electronic payment transactions between two directly communicating secure token managing units (e.g., secure elements) within the electronic payment transaction system.

An online electronic payment transaction payment is defined herein as a transaction in which a secure token managing unit (a secure element) that participates in the transaction, e.g. the secure element that initiates the token transfer (payer) or the secure element that receives a token (payee), has access and can communicate with one or more remote instances of the electronic payment system, such as a token register, a transaction register, a token issuer unit, a service provider unit such as financial service provider (FSP) via classical internet or mobile communication means or any other suitable online communication protocol. So, immediately before, while or after performing the transaction, also a registration of the transaction by storing a respective token reference in a remote token register is performed by one of the secure token managing units involved in the transaction.

An offline electronic payment transaction payment is defined herein as a direct transaction between two secure token managing units (e.g. secure elements) that participate in the transaction, e.g. the secure element that initiates the token transfer (payer) and/or the secure element that receives a token (payee). At least one of payer or payee has no access and cannot communicate with remote instances of the transaction system, such as a token register, a transaction register, a token issuer unit and/or a service provider unit, such as financial service provider (FSP) via classical internet or mobile communication means. The token transfer may then take place by local wireless communication means, such as Bluetooth, NFC, or any other suitable wireless communication protocol. The token transfer may also take place by contact-based communication means, such as USB, ISO 7816, or any other suitable contact-based communication protocol.

For a registration of a token in the token register, a token reference of the token may be generated. Each token reference comprises a public value as well as a monetary value as two distinct token reference elements.

The public value as a token reference element may be a public key of an asymmetric cryptographic key pair, wherein the private value of the token is the private key of the asymmetric cryptographic key pair. In this embodiment, the private value and the public value are considered as a token element pair.

The token reference may also comprise a monetary value as a distinct token reference element. This monetary value may be the monetary value of the first-type token from which the one or more second-type token is originated from. In case, just one second-type token is generated in the generating step, the monetary value of the second-type token may be used as monetary value for the token reference, because both monetary values are equal.

The token reference may be sent to and stored in the token register. So, a token becomes registered as a valid token in the transaction system and can be used for further online or offline electronic payment transactions.

A token "managed by" a token management unit is a token that resides in a memory (storage) space. The memory space can be an internal memory space of the token management unit, or it can be, typically for user token management units, an external memory space to which the token management unit has exclusive access rights. This memory space can include a remote memory space, such as a cloud memory (storage) space.

Implementation of modifications to tokens/generation of normal tokens can be performed with the known payment transactions of WO 2020/212 337 A1; WO 2020/212 331 A1; WO 2021 /170 646 A1 and WO 2021 / 170 645 A1 protocols.

A technical implementation of the methods at the secure token issuer unit or the service provider unit(s) can be performed using computer applets, such as agents, for instance running on secure hardware modules. A technical implementation of the described method steps can be the inclusion into secure element as software agent.

A corresponding token reference is associated with each token in the method and payment transaction system. Knowledge of a token reference does not authorize issuing of the digital money represented by the token. This represents a key difference between token references and tokens. A token reference is unique and uniquely associated with one token, so there is a 1-to-1 relationship between the token and the token reference. The token reference can be computed by each participant, such as a token management unit (secure element) of a participant in the payment system. The computing is preferably performed by the control means.

The token reference may be obtained by applying a one-way function, for example a homomorphic one-way function or a cryptographic function. This function is a one-way function, i.e., a mathematical function that is "easy" to compute in terms of complexity theory, but "difficult" to practically impossible to reverse. Here under one-way function also a function is designated, to which up to now no inversion practically executable in appropriate time and with justifiable expenditure is known. Thus, the calculation of a token reference from a token is comparable to or equivalent to the generation of a public key in an encryption method via a residue class group. Preferably, a one-way function is used that operates on a group in which the discrete logarithm problem is difficult to solve, such as a cryptographical method analogous to an elliptic curve encryption, or ECC, from a private key of a corresponding cryptographic method. The reverse function, i.e., the generation of the token from the token reference, is thereby - equivalent to the generation of the private key from a public key in an encryption method over a residue class group - very time-consuming.

In one embodiment, the one-way function is homomorphic, i.e., a cryptographical method that has homomorphism properties. Thus, mathematical operations can be performed on the token reference that can also be performed in parallel on the token and thus be traced. Using the homomorphic one-way function, calculations with token references can be traced in the monitoring entity without the corresponding tokens being known there.

In a preferred embodiment, the one-way function is a cryptographical encryption function, e.g., based on an asymmetric or symmetric encryption scheme.

When transmitting a token directly between token management units, both have knowledge of the token. Preventing a double spending (one token management unit sends the token to two different token management units), a switch operation on the token may be executed. The switch can preferably occur automatically when a token is received. In addition, it may also occur upon request, for example, a command from a token management unit.

Switching, splitting, and merging are different modifications to a token. These modifications require registering a (replacement) token reference in the payment system in case the validity should be proven.

In addition, it is advantageous that the tokens can be transmitted in any format. This implies that they can be communicated, i.e., transmitted, on arbitrary channels. They do not have to be stored in a determined format or in a determined program.

A mobile terminal, for example a smartphone, may be used as a terminal to power-up a token management unit. The token management unit may be a physically attachable/ detachable element. Alternatively, or additionally, the terminal can also be an apparatus, such as a wearable, machine, tool, vending machine or even container or vehicle.

A terminal according to the invention is thus either stationary or mobile. The terminal is preferably adapted to use the internet and/or other public or private networks. For this purpose, the terminal uses a suitable connection technology, for example Bluetooth, LoRa, NFC and/or Wi-Fi, and has at least one corresponding interface. The terminal may also be adapted to be connected to the internet and/or other networks by means of access to a mobile network.

In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.
Fig. 1 shows a conventional transaction system for issuing new tokens and deleting old tokens according to the prior art.
Fig. 2 shows an exemplary embodiment of an electronic payment system of the present invention.
Fig. 3 shows another exemplary embodiment of an electronic payment system of the present invention.
Fig. 4 shows another exemplary embodiment of an electronic payment system of the present invention.
Fig. 5 shows another exemplary embodiment of an electronic payment system of the present invention.
Fig. 6a shows exemplary embodiments of two methods of the present invention.
Fig. 6b shows an exemplary embodiment of the two methods of Fig. 6a as a block diagram.

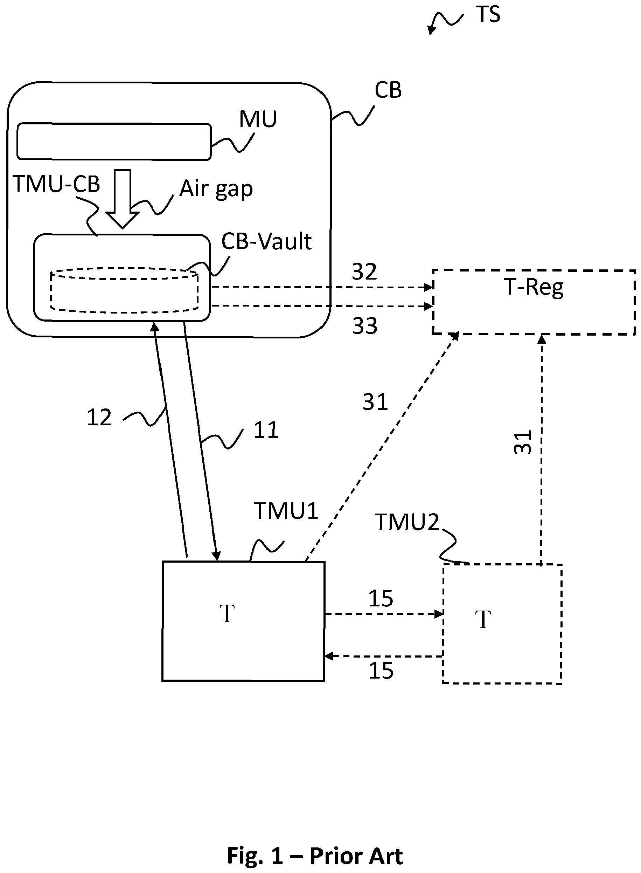

Fig. 1 shows a conventional transaction system for issuing new tokens and deleting old tokens according to the prior art as for instance described in WO 2022 / 008 319 A1. For greater details it is referred thereto.

A minting unit MU of the issuing unit CB, e.g., of a central bank, generates new token. These generated tokens are transferred to a CB-vault of a token management unit TMU-CB of the issuing unit CB, e.g., using an air-gap process. The new token to be issued is registered in the token register T-Reg by sending a create request 32.

Upon request from a token managing unit TMU1, e.g., a token managing unit (wallet) of a service provider unit, such as a financial service provider, e.g., a commercial bank, new tokens T are directly transferred into the TMU1. Typically TMU1 will generate a token of the required monetary value (switch, split or merge), send a replacement request 31 to the token register T-Reg and transfer 15 the token to a token managing unit TMU2, e.g., a token managing unit (wallet) of a costumer of the commercial bank. Typically TMU2 will perform a switch or a merge for the token received and optionally send a registration/replacement request 31 to T-Reg. Tokens T that a costumer would like to redeem, may be transferred 15 to TMU1. TMU1 may request a deletion of the old token at the CB. CB will create a destruction request (in the melting unit), send the destruction request 33 to the token register T-Reg and will delete the token in its token vault. So, classical payment transactions and receiving new/old tokens are handled by a single TMU, token management unit, which can be used for attack scenarios at the CB which is a direct or indirect security issue.

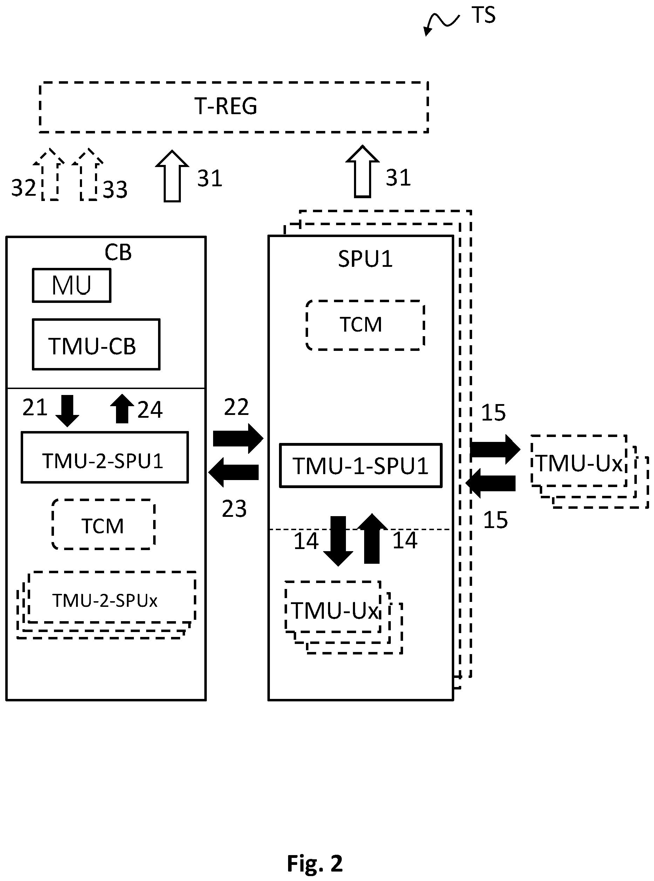

In Fig. 2 an exemplary embodiment of an electronic payment system TS of the present invention is shown. Optional units of TS are typically indicated by dashed lines.

The electronic payment system TS comprises a secure token issuer unit CB for issuing new tokens and deleting old tokens and a service provider unit SPU1 comprising a first service provider token management unit TMU-1-SPU1.

Preferably TMU1-1-SPU already comprises multiple tokens, for example ready to be exchanged 14, 15 with other token management units, such as user token management units TMU-Ux, with or without prior modification (switch, split, merge). SPU1 can be part of a financial service provider such as a commercial bank. SPU1 may further comprise control means TCM and/or user token management units TMU-Ux provided as a service for the user by SPU1. Further service provider units SPU in the TS can be implemented as indicated in dashed lines.

SPU1 has the first secure management token unit TMU-1-SPU1. The SPU1 may further comprises control means TCM for managing one or more token of the TS. The control means is configured to cause a direct exchange 14 of one or more token with one or more other secure token management units, typically user TMUs, TMU-Ux in the TS or a direct exchange 15 with external TMUs. The TMU-Ux are either hosted in the SPU1 (physical entity of the SPU1, a user logs in remotely via a terminal device, such as computer or smart phone). Alternatively, TMU-Ux are external to the SPU1, e.g., as physical hardware or software entities in the sphere of the individual users.

The secure token issuer unit CB, in addition to a minting unit MU and a melting unit (not shown), comprises an issuer token management unit TMU-CB. CB is a unit of the issuer, typically the national / regional central bank.

TMU-CB is provided for sending new tokens and/or receiving old tokens. Preferably TMU-CB already comprises multiple new tokens ready to be issued by CB to token management units of participants of the TS. TMU-CB thus is also provided to store minted tokens prior to issuance/distribution (minting on stock) or to store to-be-deleted old tokens prior to melting (ready to be melted tokens).

The token register T-Reg registers token references of tokens of TS. T-Reg may receive and process replacement requests 31 including token references from CB and/or SPU1 and/or TMU-Ux. Replacement requests 31 will typically comprise at least one registered token reference and at least one replacement token reference. Replacement requests 31 have to be value neutral (no change of sum of monetary values registered). Replacement requests 31 furthermore include a (cryptographic) proof of ownership of the registered token(s). T-Reg will accept creation requests 32 (add token reference of new token) and/or destruction (delete token reference of old token) requests 33 only, if created by CB.

In TS only the token issuer unit CB may issue new tokens into TS or delete old tokens from TS. Only CB may thus change the overall sum of monetary values of tokens in TS.

A transfer of tokens, for example between TMU-1-SP1 and TMU-Ux, is for instance described in more detail in WO 2020 / 212 331 A1, DE 10 2021 004548 or DE 10 2021 004 020. The processing details for tokens described therein not only include the receiving and sending of tokens, but for example also include token modifications (generating replacement tokens) or token registrations, e.g. by registration request 31 provided to a token register T-Reg.

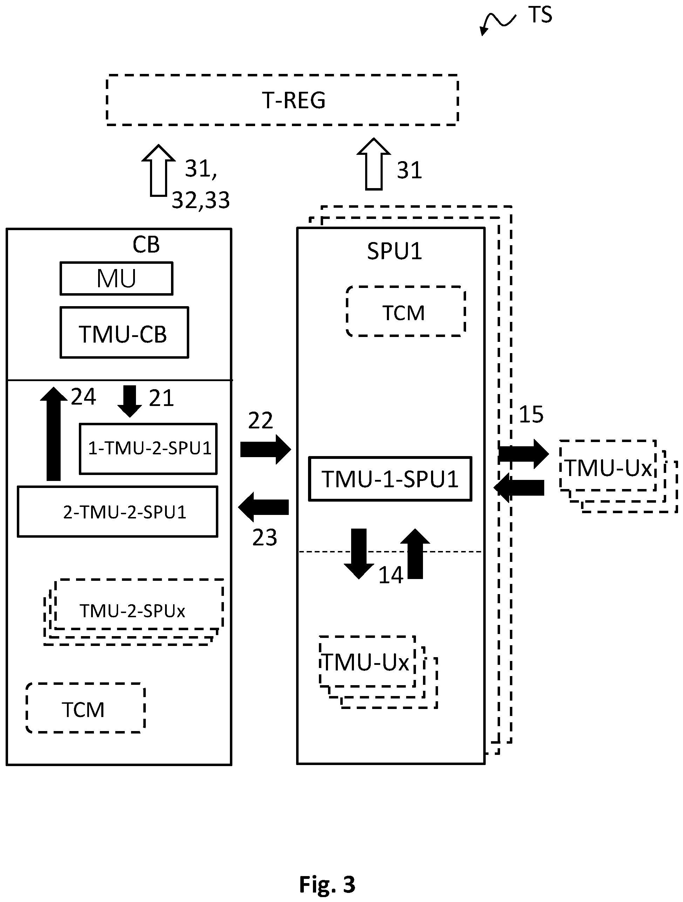

At least the above aspects (of TS/CB/SPU1/T-Reg) described for Fig. 2 can be applied to any of the present embodiments. The following aspects discussed for Fig. 2 may as well be generally applied, e.g. in Fig. 3 - 6b, and thus will also not fully be repeated, even though for some aspects adaptations to the corresponding embodiment are necessary.

In the embodiment shown in Fig. 2, CB additionally comprises a second service provider token management unit TMU-2-SPU1 of the service provider unit SPU1. TMU-2-SPU1 is also referred to as an intermediate token management unit. TMU-2-SPU1 is dedicated to (/provided for) the transfer of new and/or old tokens for SPU1, in the embodiment of Fig. 2 for new tokens and for old tokens.

TMU-2-SPU1 is provided to receive 21 one or more new token from TMU-CB of CB. Hence, TMU-2-SPU1 may store the new token(s) issued by CB to SPU1. TMU-2-SPU1 may further be provided to send 22 the new token(s) received from TMU-CB to TMU-1-SPU1.

TMU-2-SPU1 is further provided to receive 23 one or more old token to be deleted from TMU-1-SPU1. Hence, TMU-2-SPU1 may store the old token(s) to be deleted in CB for SPU1. TMU-2-SPU1 may further be provided to send 24 the old token(s) to TMU-CB.

An intermediate TMU-2-SPU1 is provided at the CB, which is provided to be exclusively used for CB transactions only, such as receiving new tokens from TMU-CB and sending old tokens to TMU-CB. In other words, in addition to the operative wallet TMU-1-SPU1 of the SPU1, an dedicated intermediate wallet TMU-2-SPU1 of SPU1 is provided. The intermediate TMU-2-SPU1 of Fig. 2 is located at the CB. So, a separate TMU/wallet for redemption and issuing of tokens is established. The configuration of the TMU-2-SPU1 is totally independent from the configuration of the TMU-1-SPU1, e.g., the TMU-2-SPU1 has deviating rules or parameters such as value limits, direction restrictions and/or automatic steps. So, the TMU-1-SPU1 can be implemented for quick token transfer with TMU-Ux, e.g., for loading tokens upon user request, whereas the TMU-2-SPU1 is exclusively used for ordering/ deleting tokens from/ at the CB. TMU-2-SPU1 may store tokens (for transfer). TMU-2-SPU1 (and/or any other TMU) further comprises the following data elements: an identifier, an authentication key (pair) and a certificate (for the key and/or the identifier).

Optionally TMU-2-SPU1 (and/or any other TMU) comprises control means adapted to perform token processing steps. Preferably however, a separate control means TCM is provided in CB for performing processing steps for tokens of TMU-2-SPU1. Thus TMU-2-SPU1 (and/or any other TMU in CB or in a service provider unit) may consist of data elements only. The token processing steps typically include token transfer, token modification, such as a switch, a split or a merge, and/or a token registration at the token register T-Reg (replacement request 31).

A control means TCM in CB (or in an SPU, SPU1) is adapted to control the processing of tokens of multiple token management units. The CB may comprise a plurality of TMU-2-SPUx of further service provider units SPU. The TCM in CB is provided for multiple service provider token management units, including TMU-2-SPU1 and TMU-2-SPUx. In the preferred variant, TMU-CB has a control means, thus is not controlled by TCM of CB. However, TCM of CB could also be used for TMU-CB.

The issued new token(s) (or replacement token(s) derived therefrom) will be send 22 from TMU-2-SPU1 to TMU-1-SPU1. The old token(s) (or replacement token(s) derived therefrom) will be send 24 from TMU-2-SPU1 to TMU-CB. TMU-2-SPU1 operates as a dedicated intermediate token management unit, particularly limited to token transfers 21-24 from or to TMU-CB and TMU-1-SPU1.

TMU-2-SPU1 may be restricted by comprising usage restrictions. The control means TCM will process tokens of TMU-2-SPU1 only in accordance with the usage restrictions. A sender restriction (and a receiver restriction) in TMU-2-SPU1 could be: TMU-CB and TMU-1-SPU1. Hence, for TMU-2-SPU1 TCM will only exchange tokens with TMU-CB and TMU-1-SPU1. In an alternative, usage restrictions could depend on the token. The sender restriction could remain: TMU-CB and TMU-1-SPU1, basically since TMU-CB sends new tokens only and TMU-1-SPU1 sends old tokens only. The recipient restriction could be: TMU-CB for old tokens and TMU-1-SPU1 for new tokens. The optional further second service provider token management units TMU-2-SPUx of SPUx could be restricted accordingly (however to TMU-1-SPUx of SPUx respectively). TMU-CB may be limited to exchange tokens with CB internal TMUs, for example with TMU-2-SPU1 (and TMU-2-SPUx). This limitation may be implemented either in the control means of TMU-CB or in a usage restriction stored in TMU-CB, e.g. as a group restriction: 'CB-internal only' or by explicitly listing the allowed sender/receivers TMUs (TMU-2-SPU1 and TMU-2-SPUx). These and other usage restrictions for wallets as well as an implementation are described in more detail in DE 10 2021 004 025.

TMU-2-SPU1 (TMU-2-SPUx) is a TMU of SPU1 (SPUx). Tokens which are stored in TMU-2-SPU1 are owned by SPU1. TMU-2-SPU1 is hosted in CB. Ingoing token transfers 21 and 23 typically do not require approval by the TMU owner. Outgoing transfers however, normally would require approval by the TMU owner, i.e. SPU1. Different approaches could be used in this regard (either alone or in combination).

TMU-2-SPU1 may automatically transfer tokens received. This is generally possible since the recipients (TMU-CB for old tokens and TMU-1-SPU1 for new tokens) are defined already. Furthermore, the reception of the token already is an implicit approval by SPU1 (having send the old token or requested a new token). A further approach would be to provide a conditional transaction in TMU-2-SPU1. SPU1 per-approves the conditional transaction(s) stored in TMU-2-SPU1. A first conditional transaction could be: upon the condition - receipt of a new token from TMU-CB - the transaction - transfer received token to TMU-1-SPU1 - is pre-approved. A second conditional transaction could be: upon the condition - a CB or TMU-CB request - the transaction - transfer old token(s) stored in TMU-2-SPU1 to TMU-CB - is pre-approved to be performed. The possible use of conditional transactions in token management units is described in more detail in DE 10 2021 005 040. A third approach to provide SPU1 with access rights limited to its TMU-2-SPU1. This approach adds flexibility since SPU1 may now for example decide to split the a stored new token and to keep a first (replacement) partial token stored in TMU-2-SPU1 and to receive only the second (replacement) partial token in TMU-1-SPU1. Another approach could be to allow (also) CB to approve transfers, in particular the token transfer 24 of old tokens to be deleted to TMU-CB.

TMU-2-SPU1 of Fig. 2 in which the new tokens and the old tokens are handled needs to assure that the new tokens are separately organized from the old tokens. This can be done by different access rules or independent storages or by marking the token as "new" or "old" by using dedicated token elements or listing these tokens in a database exclusively accessible by the TMU-2-SPU1. An access rule of TMU-2-SPU1 may be that in an automated manner, new tokens are directed to TMU-1-SPU1 and that old tokens are stored in a storage of TMU-2-SPU1 until CB requests these old tokens.

A certificate of TMU-2-SPU1 (or any other TMU-2-SPUx) may certify that the TMU is a dedicated intermediate TMU (for old and/or new tokens only). For example, the identifier of the token management unit may comprise a TMU type information, identifying the TMU as being of a dedicated intermediate TMU type. In addition or alternatively, dedicated intermediate TMUs may need a certificate issued from a specific issuer/signed by a specific issuer key.

In Fig. 3, another exemplary embodiment of the TS of the present invention is shown. Hereinafter, it is referred to the explanations as stated in Fig. 2 and only the differences to Fig. 2 will be discussed.

In Fig. 2, the TMU-2-SPU1 is a single management unit. In contrast to Fig. 2, the TMU-2-SPU1 in Fig. 3 comprises a new token management unit 1-TMU-2-SPU1 (liquidity wallet) and an old token management unit 2-TMU-2-SPU1 (redeem wallet). In other words: Two dedicated intermediate TMUs are used, namely 1-TMU-2-SPU1 for new tokens and 2-TMU-2-SPU1 for old tokens. Both, 1-TMU-2-SPU and 2-TMU-2-SPU reside in the CB.

In Fig. 3 one or more new token(s) are transferred 21 from TMU-CB to 1-TMU-2-SPU1. 1-TMU-2-SPU1 sends 22 the new token(s) issued to SPU1 to TMU-1-SPU1. 2-TMU-2-SPU1 receives 23 the old token from TMU-1-SPU1. The stored old token is sent 24 from 2-TMU-2-SPU1 to TMU-CB for deletion.

The CB may comprise a plurality of further 1-TMU-2-SPUx and 2-TMU-2-SPUx, being dedicated for different SPUx. Preferably, TCM of CB processes the tokens of 1-TMU-2-SPU1 and 2-TMU-2-SPU1 (and optionally 1-TMU-2-SPUx and 2-TMU-2-SPUx).

The use of separate token management units 1-TMU-2-SPU1, 2-TMU-2-SPU1 for new and old tokens avoids the need to distinguish the two token types in a TMU. Furthermore, in variants it may at least partly reduce the usage restrictions and/or conditional transactions to be handled by TCM in a token transfer. Finally, also the access rights/approaches for approval can be handled more strictly (e.g. CB access for 2-TMU-2-SPU1 only) or combined more flexibly (e.g. SPU1 access for 1-TMU-2-SPU1 only and different one of the approval approaches for 2-TMU-2-SPU1).

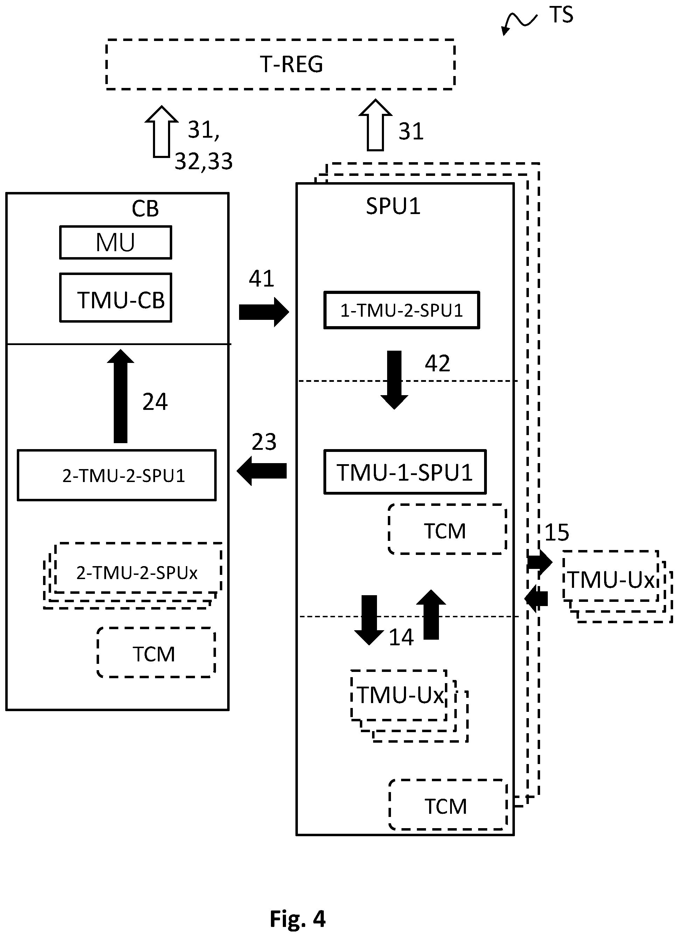

In Fig. 4, another exemplary embodiment of the TS of the present invention is shown. Hereinafter, it is referred to the explanations as stated in Fig. 2 and Fig. 3 and only the differences to Fig. 2 or Fig. 3 will be discussed.

In contrast to Fig. 3, the 1-TMU-2-SPU1 (liquidity wallet) in Fig. 4 is located at the SPU1 and the 2-TMU-2-SPU1 (redeem wallet) is located at the CB. The CB may comprise a plurality of 2-TMU-2-SPUx, being dedicated for different SPUx. TCM of CB may be used for the service provider token management units 2-TMU-2-SPU1 and 2-TMU-2-SPUx.

A transfer of new token(s) 41 from CB to 1-TMU-2-SPU1 in SPU1 now is an external transfer for CB, however 1-TMU-2-SPU1 is a dedicated intermediate TMU (not a TMU open to user interaction). CB may internally store the identity of 1-TMU-2-SPU1 for SPU1 and/or identify 1-TMU-2-SPU1 before the transfer as being a dedicated intermediate TMU (use ID and/or certificate). Hence, not only the security within SPU1 is improved, but indirectly the security of CB is improved in this regard. A transfer of the issued new token(s) 42 from 1-TMU-2-SPU1 to TMU-1-SPU1 is internal for SPU1.

A first TCM of SPU1 is preferably used for the new second service provider token management units 1-TMU-2-SPU1 (and optionally 1-TMU-1-SPU1). A second TCM of SPU1 is used for the user token management units TMU-Ux hosted in SPU1 (and optionally for 1-TMU-1-SPU1).

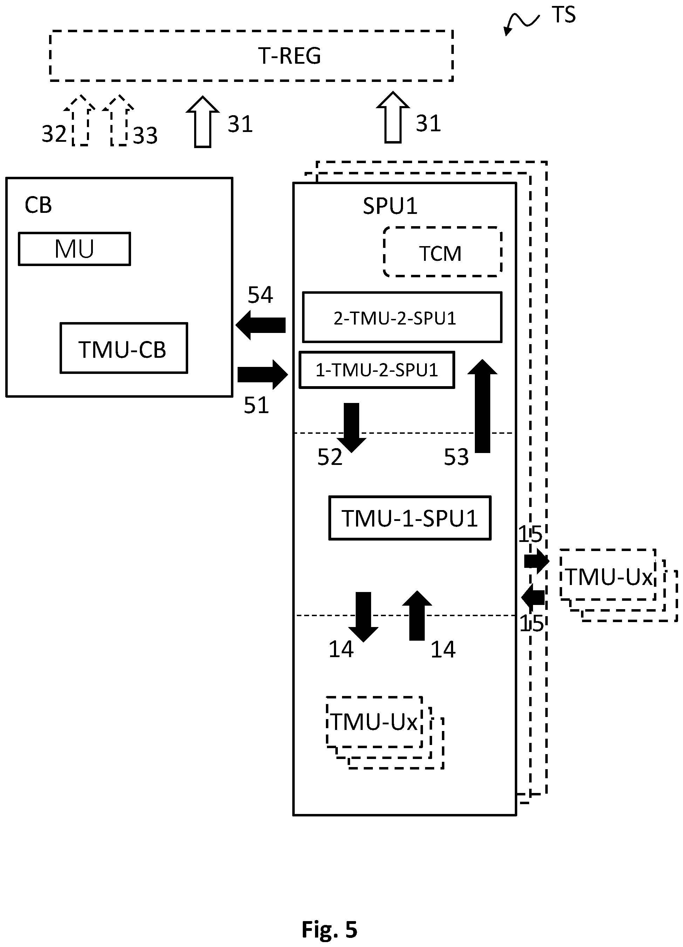

In Fig. 5, another exemplary embodiment of the TS of the present invention is shown. Hereinafter, it is referred to the explanations as stated in Fig. 2 to Fig. 4 and only the differences to Fig. 2 to Fig. 4 will be discussed.

In contrast to Fig. 2 to Fig. 4, both, the 1-TMU-2-SPU1 (liquidity wallet) and the 2-TMU-2-SPU1 (redeem wallet) in Fig. 5 are located and hosted at the SPU1.

Using the two 1-TMU-2-SPU1 (liquidity wallet) and the 2-TMU-2-SPU1 (redeem wallet) as two separate wallets - as shown in Fig. 3 to Fig. 5, it is possible to implement separate direction restrictions and transaction restrictions. New tokens are received 51 in 1-TMU-2-SPU1. SPU1 may internally transfer 52 the issued new token TMU-2-SPU1. Old tokens are transferred 53 to 2-TMU-2-SPU1 and can be transferred 54 to CB later.

For instance, the liquidity wallet 1-TMU-2-SPU1 will be implemented as receiving only (new) tokens from the CB (e.g. the TMU-CB) and sending these tokens to a TMU-1-SPU1. Other transactions and other direction would be unallowable and would be e.g. denied by the TCM of SPU1. For instance, the redeem wallet 2-TMU-2-SPU1 may be implemented as receiving (old) tokens only from TMU-1-SPU1 and sending these tokens to the CB (e.g. TMU-CB). Other transactions and other direction would be an unallowable and would be e.g. denied by the TCM of SPU1.

The embodiment of Fig. 5 is particularly more flexible in cases, where requests from an SPU to the CB, to delete an old token of SPU or to issue a new token for SPU, are more likely to be rejected and/or are processed with a time delay. In particular the SPU may control its tokens and requests more flexibly.

Using the two 1-TMU-2-SPU1 (liquidity wallet) and the 2-TMU-2-SPU1 (redeem wallet) as two separate TMUs - as shown in Fig. 3 to Fig. 5, it is also possible to implement conditional transactions. For instance, requests may only be sent via the dedicated liquidity wallet 1-TMU-2-SPU1 and/or the dedicated redeem wallet 2-TMU-2-SPU1 and/or the wallet TMU-2-SPU1 if it is implemented as a single unit (Fig. 2.). The SPU1 or CB writes the conditional transaction into the respective TMU, and the local TCM decides whether the request (redeem or issuing) is fulfilled by setting the respective condition.

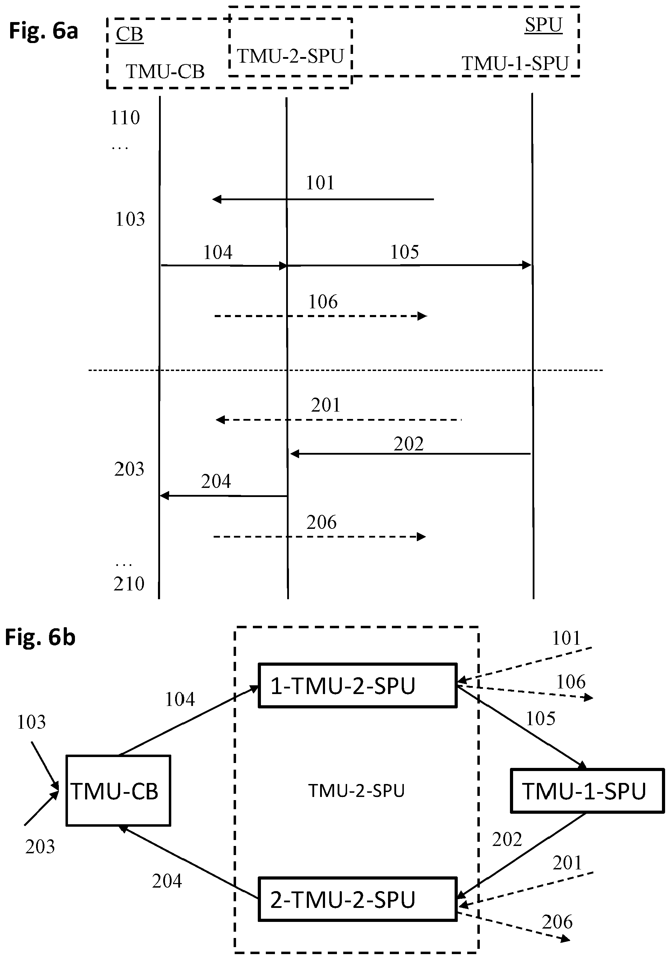

In Fig. 6a, a method for receiving new tokens issued by a secure token issuer unit CB of the TS is shown above the dashed line (not the dashed arrow). The method includes steps 110 and 101 to 106. A corresponding method is additionally illustrated (for the case of separate TMUs for old and new tokens) in Fig. 6b.

As indicated by the dashed boxes TMU-2-SPU may be provided in CB and/or SPU (cf. to Fig. 2 to 5).

In an independent step 110 CB may mint one or more new token(s). New tokens ready to be issued would be stored in TMU-CB.

In step 101, SPU1 requests one or more new token(s) from CB. The request may specify the number of tokens and/or their overall monetary value (e.g. 2 tokens with value 5000 each or one or more token(s) with value 50 000). SPU1 may send such a request for example either according to defined rules (such as, value of tokens in TMU-1-SPU or in TMU-2-SPU is below a threshold) or triggered by a user request (user requests tokens for his TMU-Ux). Optionally, TMU-2-SPU is used for sending the new token request 101 to CB (SPU defines the request in TMU-2-SPU, e.g. as a token request or as a transaction request or as a conditional transaction).

In step 103, an approval step is performed by the CB. If the outcome of step 103 is that the request of step 101 is approved by the CB, then new tokens are transferred in step 104 from TMU-CB to TMU-2-SPU. Optionally or if required the CB may mint 110 the new tokens upon request. Step 104 may require an explicit issuing-request created and transferred from the TMU-2-SPU, preferably the 1-TMU-2-SPU, to the CB.

If the outcome of step 103 is that the request of step 101 is denied by the CB, then the CB informs the SPU accordingly in step 106 (new token request denied). The information send in step 106 may comprise a reason for the denial or an error code (such as 'limit exceeded', 'tokens not available now' or ...).

In optional step 105, the TMU-2-SPU, e.g., the 1-TMU-2-SPU, transfers the new token to its TMU-1-SPU. It should be noted that SPU can only transfer tokens (the new token or a replacement token created based thereon) from TMU-2-SPU to TMU-1-SPU.

In Fig. 6a, also a method for deleting old tokens by a secure token issuer unit CB of the TS is shown below the dashed line (not dashed arrow). A corresponding method is again additionally illustrated in Fig. 6b.

In optional step 201, a request to delete old tokens is send. In step 202, one or more old token may be transferred from the TMU-1-SPU to TMU-2-SPU, preferably to the 2-TMU-2-SPU. Preferably, the transfer 202 replaces/forms a request 201 (e.g. CB is automatically informed about the transfer if required).

In step 203, an approval step is performed by the CB. Upon approval in step 203, the tokens are transferred in step 204 from TMU-2-SPU/2-TMU-2-SPU to TMU-CB. Alternatively, upon denial in step 203, the tokens are not transferred and the SPU is informed in step 206 accordingly (cf. to step 106).

In a subsequent step 210 CB may melt the old token(s). The melting typically comprises creating of a destruction request for T-Reg, sending the destruction request to T-Reg and finally deleting the old token from TMU-CB. Step 210 may be performed directly after step 204, but preferably is performed later/independently, e.g. for melting multiple tokens at a time.

In the following, scenarios will be described that refer to the embodiments of Fig. 2 to 6b.

In a following scenario-A, an SPU orders/requests new tokens at the CB. The SPU may be a large commercial bank and it needs to be assured that there are always enough tokens to be distributed to all branches of the SPU and to the costumers of the SPU. For creating a request for new tokens, the SPU may need to log into a CB application. The login may be secured with personal credentials. After a successful login, an overview is presented that indicates a status of all token requests (both current and past), a monetary amount of tokens in the TMU-2-SPU(hosted at the CB for instance) and optionally a monetary amount of tokens in the TMU-1-SPU (first wallet, settlement account) usable for exchange with TMU-Ux. After a successful login, new tokens to be transferred into the TMU-2-SPU, preferably the 1-TMU-2-SPU (liquidity wallet) may be ordered/requested. This new order needs to be approved at the CB. In case a monetary amount (=value) is well within a normal limit (daily limit or agreed limit) and the SPU has sufficient securities (i.e., a monetary amount of tokens in the TMU-1-SPU exceeds a preset threshold), the order is approved. If there is sufficient new token in TMU-CB, no minting of tokens is needed. The CB transfers the requested new token from the TMU-CB to the (1-)TMU-2-SPU. It is now the decision of the SPU whether or when to transfer the new tokens into or replacement tokens derived therefrom to TMU-1-SPU for further transactions, e.g. with TMU-Ux.

In following scenario-B, a CB denies a new token order. It is CBs duty to assure that only valid requests for new tokens are processed and that the SPU that orders new tokens have sufficient liquidity. In addition, a total amount of tokens circulating in the TS must be always controlled by CB policies. Thus, new order needs to be approved at the CB. In case a monetary amount (=value) is not within a normal limit (daily limit or agreed limit) or the SPU has insufficient securities (i.e. a monetary amount of tokens in the TMU-1-SPU undershoots a preset threshold), the order is denied. A denial information is sent to the SPU.

In following scenario-C, a SPU redeems token. A SPU wants to return tokens, e.g., based on a policy of the SPU. To initiate the process, the old tokens are transferred from TMU-1-SPU into the TMU-2-SPU, preferably the 2-TMU-2-SPU. For redeeming tokens at the CB, the SPU needs to log into a CB application. The login may be secured with personal credentials. The redeem-order needs to be approved at the CB. In case a monetary amount (=value) is well within a normal limit (daily limit or agreed limit) and ownership of the tokens is proven, the order is approved, and the redeemed tokens are credited to the SPUs bank account. For checking at the SPU, after crediting, the balance of the TMU-2-SPU, preferably the 2-TMU-2-SPU should be zero.

Minting and destroying of tokens at the CB can be done as disclosed in WO 2022 / 008 319 A1 and for further technical details it is referred thereto.

The system TS may also comprise the token register T-REG. The token register T-Reg can be reached via an internet connection and / or a mobile communication, using typical protocols such as HTTP, TCP, IP, UDP and or other suitable communication protocols.

It is referred to WO 2020/212 337 A1; WO 2021 /170 646 A1; WO 2021 / 170 645 A1, DE 10 2021 004548 and/or DE 10 2021 004 020 for more technical details related to the structure of tokens and their corresponding token reference as well as modifications performed or performable, such as SWITCH, SPLIT, MERGE.

In any case, during direct electronic payment transactions between secure elements, in an offline electronic payment transaction, a modification (merge, split, switch) of a token may be recorded as a history entry (replacement request) in the created replacement token. Tokens may thus be transferred together with one or more history entries (replacement requests which still have to be send to T-Reg). In an online electronic payment transaction, a modification (merge, split, switch) of a token may be registered upon registration request at the T-Reg.

### REFERENCE SIGNS

- TS: electronic transaction system
- SPU: (financial) Service Provider Unit
- TMU-1-SPU: secure token management unit of SPU, 1. SPU-wallet
- TMU-2-SPU: secure token management unit of SPU, 2. SPU-wallet
- 1-TMU-2-SPU: new token TMU-2-SPU, liquidity wallet
- 2-TMU-2-SPU: old token TMU-2-SPU, redeem wallet
- TMU-U: secure token management unit of user, User Wallet
- CB: secure token issuer unit (central bank unit)
- TMU-CB: secure token management unit of CB,
- MU: minting/ melting unit
- T-Reg: token register
- T: token

- 11, 21, 22, 41, 42, 51, 52: transfer of new token
- 12, 23, 24, 53, 54: transfer of old token
- 14, 15: transfer of token
- 31: replacement request
- 32: creation request
- 33: destruction request

- 101: request new token
- 103: approve request
- 104: first transfer of new token
- 105: second transfer of new token
- 106: request not approved
- 110: mint new token
- 201: request old token deletion
- 202: first transfer of old token
- 203: approve request
- 204: second transfer of old token
- 206: request not approved
- 210: delete old token

## Claims

1. A secure token issuer unit (CB) of an electronic payment transaction system (TS), the secure token issuer unit (CB) comprising:
- a minting unit (MU) adapted to generate a new token to be issued in the electronic payment transaction system (TS) and/or a melting unit adapted to delete old tokens to be deleted from the electronic payment transaction system (TS); and
- an issuer token management unit (TMU-CB) comprising one or more, new or old, token (T) of the electronic payment transaction system (TS);
- control means for processing tokens (T) of the electronic payment transaction system (TS), wherein the control means is adapted to:
∘ cause a direct exchange of tokens (T) with at least one first service provider token management unit (TMU-1-SPU) of a service provider unit (SPU) in the electronic payment transaction system (TS); and
∘ send registration requests including token references to a token register (T-Reg) of the electronic payment transaction system (TS);
**characterized in that**
the secure token issuer unit (CB) comprises a second service provider token management unit (TMU-2-SPU) exclusively provided for the service provider unit (SPU), and
the second service provider token management unit (TMU-2-SPU) is provided for comprising a new token received (21) from the issuer token management unit (TMU-CB) and/or an old token to be send (24) to the issuer token management unit (TMU-CB).

2. A secure service provider unit (SPU) of an electronic payment transaction system (TS), the secure service provider unit (SPU) comprising:
- a first service provider token management unit (TMU-1-SPU) comprising one or more token (T) of the electronic payment transaction system (TS); and
- control means adapted to:
∘ cause a direct exchange of one or more token (T) with one or more other token management units (TMU-U) in the electronic payment transaction system (TS),
∘ send registration requests including token references to a token register (T-Reg) of the electronic payment transaction system (TS), and
∘ access the first service provider token management unit (TMU-1-SPU);
**characterized in that**
the secure service provider unit (SPU) comprises a second service provider token management unit (TMU-2-SPU) exclusively provided for this secure service provider unit (SPU); and
the second service provider token management unit (TMU-2-SPU) is provided to comprise a new token received (51) from a token issuer unit (CB) and/or an old token to be send (54) for deletion to the token issuer unit (CB).

3. The secure unit (CB, SPU) of claim 1 or 2, the secure token issuer unit (CB) of claim 1 or the secure service provider unit (SPU) of claim 2, wherein the second service provider token management unit (TMU-2-SPU) is
exclusively provided as an intermediary token management unit of the secure service provider unit (SPU) between the first service provider token management unit (TMU-1-SPU) and the issuer token management unit (TMU-CB); and/or
exclusively provided for the transfer of new tokens issued in the electronic payment transaction system (TS) by secure token issuer unit (CB) and/or old tokens to be deleted from the electronic payment transaction system (TS) by the secure token issuer unit (CB).

4. The secure unit (CB, SPU) of any of the preceding claims, comprising
the second service provider token management unit may be
a new (second) service provider token management unit for new tokens (1-TMU-2-SPU ) or an old (second) service provider token management unit for old tokens (2-TMU-2-SPU ), wherein preferably the secure unit further comprises a old/new (second) service provider token management unit for old/new tokens (2-TMU-2-SPU; 1-TMU-2-SPU) respectively; or
a (second) service provider token management unit (TMU-2-SPU) for old and new tokens.

5. The secure unit (CB, SPU) of any of the preceding claims, wherein token management units (TMU-U, TMU-1-SPU, TMU-2-SPU, TMU-CB) of the electronic payment transaction system (TS), besides one or more token (T) of the electronic payment transaction system (TS), comprise:
- a token management unit identifier; and/or
- at least one cryptographic key; and/or
- a certificate.

6. The secure unit (CB, SPU) of any of the preceding claims, wherein
the control means (TCM) is configured to access multiple token management units, including the second service provider token management unit (TMU-2-SPU), preferably in the secure service provider unit (SPU) including user token management units (TMU-U) of multiple users of the electronic payment transaction system (TS) or in the secure token issuer unit (CB) including second service provider token management units (TMU-2-SPUx) of multiple service provider units (SPUx).

7. The secure unit (CB, SPU) of any of the preceding claims, wherein
the second service provider token management unit (TMU-2-SPU) is configured to exclusively exchange tokens with the first service provider token management unit (TMU-1-SPU) of the service provider unit (SPU) and with the issuer token management unit (TMU-CB) of the token issuer unit (CB); and/or
to create one or more replacement tokens based on one or more new token, particularly by performing a switch, split or merge of tokens.

8. The secure unit (CB, SPU) of any of the preceding claims, wherein
the second service provider token management unit (TMU-2-SPU) further comprises usage restrictions, in particular a sender restriction and a recipient restriction, preferably restrictions to the first service provider token management unit (TMU-1-SPU) and the issuer token management unit (TMU-CB).

9. The secure unit (CB, SPU) of any of the preceding claims, further comprising means for accessing a token storage (CB-Vault, SPU-Vault) accessible exclusively for the secure unit, wherein the token storage is preferably a token vault.

10. The secure unit (CB, SPU) of any of the preceding claims, wherein the second service provider token management unit (TMU-2-SPU) is provided as a single token management unit (TMU-2-SPU) in which new tokens issued from the token issuer unit (CB) are separately managed from old tokens to be deleted at the token issuer unit (CB), wherein the separation is preferably assured by:
- marking the token as new token or as old token to be deleted; and/or
- providing a token storage exclusively dedicated to the new token or the old token to be deleted; and/or
- defining dedicated access rights for accessing the new token and the old token to be deleted.

11. The secure unit (CB, SPU) of any of claims 1 to 9, wherein the second service provider token management unit (TMU-2-SPU)
is a new token management unit (1-TMU-2-SPU) comprising
- the control means for receiving one or more new token from the issuer token management unit (TMU-CB), wherein the controlling means is configured to:
▪ cause a direct transfer of the received one or more new token to the first service provider token management unit (TMU-1-SPU) of the secure service provider unit (SPU); and/or
is an old token management unit (2-TMU-2-SPU) comprising:
- the control means for sending one or more token to be deleted at the token issuer unit (CB), wherein the control means is configured to:
▪ receive the one or more token to be deleted from the first secure management unit (TMU-1-SPU) of the secure service provider unit (SPU);
▪ send the one or more token to be deleted to the issuer token management unit (TMU-CB).

12. An electronic payment transaction system (TS) comprising:
- the secure unit (CB, SPU) according to any of the preceding claims;
- a token register (T-Reg) for registering the tokens (T) of the electronic payment transaction system (TS).

13. The electronic payment transaction system (TS) according to claim 12, comprising:
- a plurality of secure token management units (TMU-Ux) of users for directly exchanging tokens; and/or
- either one or more secure service provider units (SPU) and the secure unit, secure token issuer unit (CB), or the secure unit, secure service provider unit (SPU), and a secure token issuer unit (CB).

14. A method for providing new tokens, issued by a secure token issuer unit (CB) of an electronic payment transaction system (TS), preferably a system (TS) according to one of the claims 12 or 13, the method comprising the steps of:
- receiving a request (102) for a new token at the secure token issuer unit (CB) from a secure service provider unit (SPU);
- if the request is approved (103) by the secure token issuer unit (CB), then transfer (104) the new token from an issuer token management unit (TMU-CB) accessible by the secure token issuer unit (CB) to a second service provider token management unit (TMU-2-SPU) of the secure service provider unit (SPU), the second service provider token management unit (TMU-2-SPU) being exclusively dedicated to the transfer of new tokens and optionally old tokens to be deleted;
- if the request is denied by the secure token issuer unit (CB), then inform the requesting secure service provider unit (SPU) by the secure token issuer unit (CB).

15. A method for receiving old tokens to be deleted from an electronic payment transaction system (TS) by a secure token issuer unit (CB) of the electronic payment transaction system (TS), preferably a system (TS) according to one of the claims 12 or 13, the method comprising the steps of:
- receiving (202) an old token to be deleted in a second service provider token management unit (TMU-2-SPU) in the electronic payment transaction system (TS) from a first service provider token management unit (TMU-1-SPU), the second service provider token management unit (TMU-2-SPU) being exclusively dedicated to the transfer of old tokens to be deleted and optionally new tokens;
- receiving a deletion request of the service provider unit (SPU);
- if the request is approved by the secure token issuer unit (CB), then transferring (203) the old token from the second service provider token management unit (TMU-2-SPU) to the issuer token management unit (TMU-CB);
- if the request is denied by the secure token issuer unit (CB), then inform the requesting secure service provider unit (SPU) by the secure token issuer unit (CB).

16. A non-transitory computer readable storage medium for tangibly storing computer program instructions capable of being executed by a processor, the computer program instructions defining the steps of one of the preceding method claims 14 or 15.
